# EUROPEAN PATENT APPLICATION

(11) **EP 3 614 538 A1**
(43) Date of publication of application: **26.02.2020**
(21) Application number: 19180645.4
(22) Date of filing: 17.06.2019
(51) Int. Cl.: H02K 5/22, H02K 5/04, H02K 3/52

(54) **ELECTRIC DEVICE**

(30) Priority: 21.08.2018 JP 2018154958
(71) Applicant: Shinano Kenshi Co., Ltd., Ueda-shi, Nagano 386-0498 (JP)
(72) Inventor: YAMADA, Takuji, Ueda-shi,, Nagano 386-0498 (JP); HIRACHI, Eiji, Ueda-shi,, Nagano 386-0498 (JP)
(74) Representative: Haseltine Lake Kempner LLP

(57) **Abstract**

An electric device includes: a motor; a connector; an intermediate terminal electrically connecting the motor and the connector; and a holding plate holding the motor, the connector, and the intermediate terminal, wherein the motor is held on one side of the holding plate, the connector and the intermediate terminal are held on another side of the holding plate, the motor includes a coil terminal, the coil terminal is electrically connected to a coil of the motor and penetrates the holding plate from the one side to the another side, the connector includes a connector terminal, and the intermediate terminal is welded and electrically connected to the coil terminal and the connector terminal.

## Description

### [TECHNICAL FIELD]

The present invention relates to an electric device.

### [BACKGROUND ART]

Patent Document 1 discloses an electric device equipped with a motor.

### [PRIOR ART DOCUMENT]

### [PATENT DOCUMENT]

[Patent Document 1] Japanese Unexamined Patent Application Publication No. 2012-110188

### [SUMMARY OF THE INVENTION]

### [PROBLEMS TO BE SOLVED BY THE INVENTION]

Some electric devices have connectors. The connector is provided with a printed circuit board. The printed circuit board is soldered to a coil terminal electrically connected to a coil of the motor. This soldering work might reduce productivity of the electric device.

It is therefore desirable to provide an electric device with improved productivity.

### [MEANS FOR SOLVING THE PROBLEMS]

An electric device according to an embodiment includes: a motor; a connector; an intermediate terminal electrically connecting the motor and the connector; and a holding plate holding the motor, the connector, and the intermediate terminal, wherein the motor is held on one side of the holding plate, the connector and the intermediate terminal are held on another side of the holding plate, the motor includes a coil terminal, the coil terminal is electrically connected to a coil of the motor and penetrates the holding plate from the one side to the another side, the connector includes a connector terminal, and the intermediate terminal is welded and electrically connected to the coil terminal and the connector terminal.

### [EFFECTS OF THE INVENTION]

According to an embodiment, it is possible to provide an electric device with improved productivity.

### [BRIEF DESCRIPTION OF THE DRAWINGS]

FIG. 1 is a cross-sectional view of a blower according to a present embodiment;
FIG. 2 is a cross-sectional view taken along A-A line of FIG. 1;
FIG. 3 is a perspective view of the blower with the rear cover removed;
FIG. 4 is a partially enlarged view of FIG. 1;
FIG. 5 is a partially enlarged view, of FIG. 3, illustrating the vicinity of connector terminals and connector ground terminals;
FIG. 6 is a partially enlarged view, of FIG. 3, illustrating the vicinity of the coil terminals and motor ground terminals;
FIG. 7A is an external view of an intermediate ground terminal, and FIG. 7B is an enlarged view, of FIG. 7A, illustrating an end portion; and
FIG. 8A is an enlarged view, of FIG. 7A, illustrating an end, and FIG. 8B is a cross-sectional view taken along B-B line of FIG. 8A.

### [MODES FOR CARRYING OUT THE INVENTION]

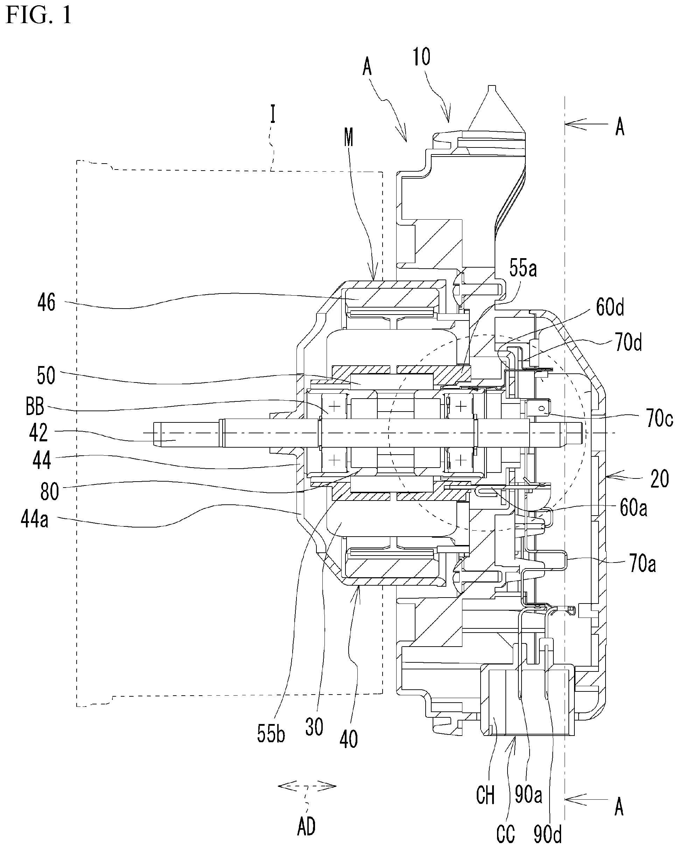

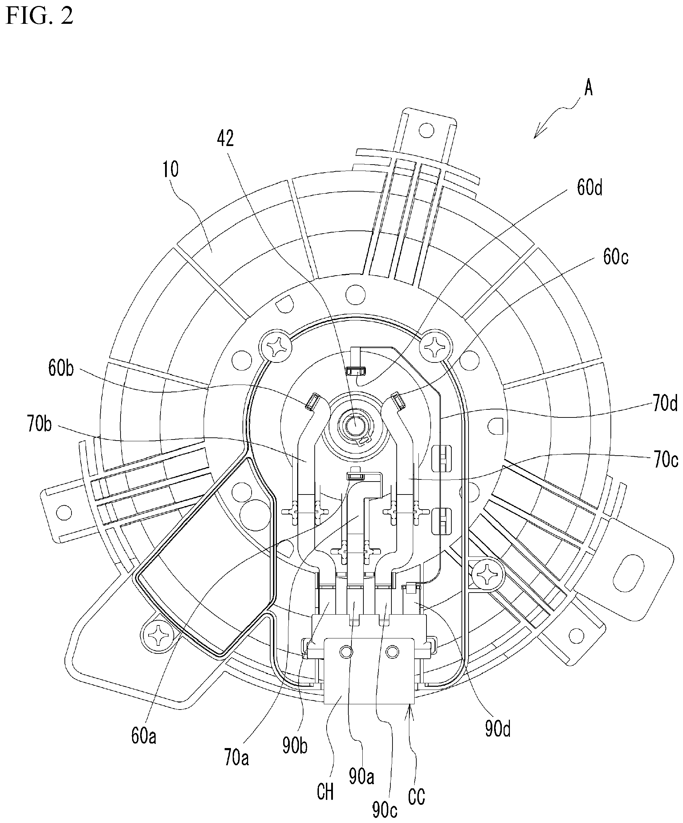

FIG. 1 is a cross-sectional view of a blower A according to a present embodiment. FIG. 2 is a cross-sectional view taken along A-A line of FIG. 1. The blower A includes a holding member 10, a rear cover 20, a motor M, and a fan I rotated by the motor M. The fan I is simply illustrated by a dashed line in FIG. 1. The motor M and the fan I are located on one side of the holding member 10, and the rear cover 20 is attached to the other side of the holding member 10. Although the holding member 10 and the rear cover 20 are made of synthetic resin, the present invention is not limited to this. They may be made of metal.

The motor M will be described. As illustrated in FIG. 1, the motor M is located between the fan I and the holding member 10. The motor M includes coils 30, a rotor 40, a stator 50, and a housing 80. The stator 50 is made of metal. Insulators 55a and 55b made of synthetic resin are fixed and sandwich each tooth of the stator 50 in an axial direction AD. The coil 30 is wound around each tooth of the stator 50 through the insulators 55a and 55b. Additionally, the insulator 55a is located on the holding member 10 side, and the insulator 55b is located on the fan I side. Coil terminals 60a to 60c electrically connected to the coils 30 are supported by the insulator 55a.

The rotor 40 includes a rotational shaft 42, a yoke 44, and one or more permanent magnets 46. The rotational shaft 42 is rotatably supported through the housing 80. Specifically, the rotational shaft 42 is rotatably supported by bearings BB held in the housing 80. The yoke 44 fixed to the rotational shaft 42 outside the housing 80 has a substantially cylindrical shape, and is made of metal. One or more permanent magnets 46 are fixed to an inner circumferential surface of the yoke 44. Additionally, the yoke 44 is provided with vent holes 44a around the rotational shaft 42, thereby promoting heat dissipation of the motor M. The permanent magnet 46 faces the outside of the teeth of the stator 50. When the coils 30 are energized, the teeth of the stator 50 are excited, which exerts magnetic attractive force and magnetic repulsive force between the permanent magnet 46 and the teeth. This causes the yoke 44, that is, the rotor 40 to rotate relatively to the stator 50. Thus, the motor M is an outer rotor type motor in which the rotor 40 rotates.

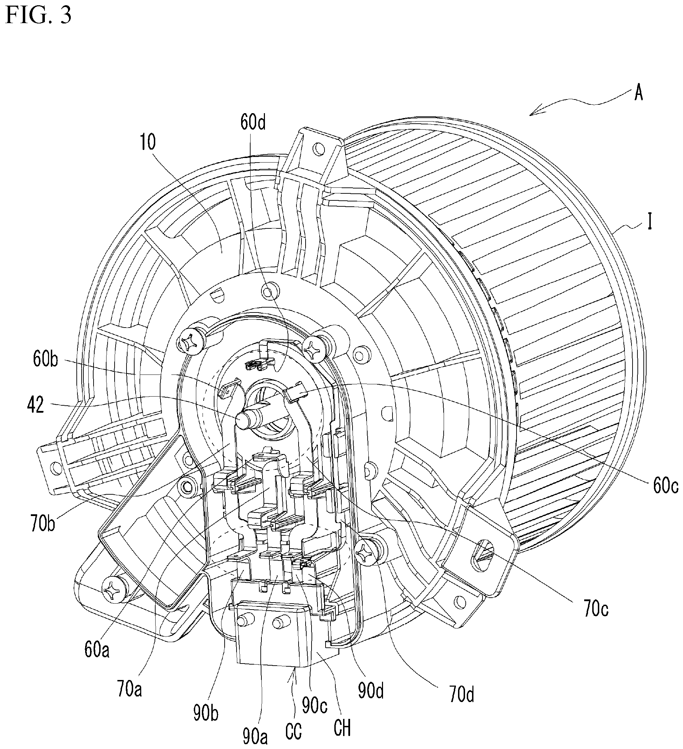

FIG. 3 is a perspective view of the blower A with the rear cover 20 removed. As illustrated in FIGs. 1 to 3, a connector CC is sandwiched by the holding member 10 and the rear cover 20. The connector CC is provided on an outer peripheral end side of the holding member 10 and the rear cover 20. The connector CC includes a holder CH, connector terminals 90a to 90c and a connector ground terminal 90d held by the holder CH. The holder CH is made of synthetic resin with insulation. The connector terminals 90a to 90c and the connector ground terminal 90d are made of metal with electric conductivity. Specifically, the connector terminals 90a to 90c and the connector ground terminal 90d are made of phosphor bronze. In addition, at least one of the connector terminals 90a to 90c and the connector ground terminal 90d may be made of copper other than phosphor bronze. The connector terminals 90a to 90c and the connector ground terminal 90d are arranged in one direction orthogonal to the axial direction AD. As for each of the connector terminals 90a to 90c and the connector ground terminal 90d, each width is wider than each thickness. The connector terminals 90a to 90c and the connector ground terminal 90d are held by the holder CH such that each thickness direction is orthogonal to the axial direction AD. The connector terminal 90a is located between the connector terminals 90b and 90c. The connector ground terminal 90d is located outside the connector terminals 90a to 90c. The connector terminals 90a to 90c and the connector ground terminal 90d have substantially the same length, and protrude from the connector CC toward the rotational shaft 42. The holder CH is formed into a substantially rectangular tube shape having a bottom so that a mating connector is capable of being inserted thereto. The connector terminals 90a to 90c and the connector ground terminal 90d are held so as to penetrate the bottom of the holder CH. The connector CC is not provided with a printed circuit board.

Further, intermediate terminals 70a to 70c and an intermediate ground terminal 70d are held by the holding member 10 between the holding member 10 and the rear cover 20. The intermediate terminals 70a to 70c and the intermediate ground terminal 70d are made of metal with electric conductivity. Specifically, the intermediate terminals 70a to 70c are made of copper. In addition, at least one of the intermediate terminals 70a to 70c may be made of phosphor bronze. The intermediate ground terminal 70d is made of stainless steel (SUS304). The intermediate terminals 70a to 70c and the intermediate ground terminal 70d are arranged in one direction orthogonal to the axial direction AD. Each width of the intermediate terminals 70a to 70c and the intermediate ground terminal 70d is greater than each thickness. The intermediate terminals 70a to 70c and the intermediate ground terminal 70d substantially extend from the connector CC toward the rotational shaft 42.

The holding member 10 holds the intermediate terminals 70a to 70c such that each thickness direction thereof is identical to the axial direction AD and that each width direction thereof is orthogonal to the axial direction AD. On the other hand, the holding member 10 holds the intermediate ground terminal 70d such that the thickness direction thereof is orthogonal to the axial direction AD and that the width direction thereof is identical to the axial direction AD. The intermediate terminal 70a is located between the intermediate terminals 70b and 70c. The intermediate ground terminal 70d is located outside the intermediate terminals 70a to 70c. The intermediate terminal 70a is the shortest among the intermediate terminals 70a to 70c, and the intermediate terminals 70b and 70c have substantially the same length. The intermediate ground terminal 70d is longer than each of the intermediate terminals 70a to 70c. Further, any of the intermediate terminals 70a to 70c and the intermediate ground terminal 70d is longer than any of the connector terminals 90a to 90c and the connector ground terminal 90d.

The coil terminals 60a to 60c and a motor ground terminal 60d, penetrating through the holding member 10, are located around the rotational shaft 42. The coil terminals 60a to 60c are arranged at substantially even angular intervals around the rotational shaft 42. Among the coil terminals 60a to 60c, the coil terminal 60a is closest to the connector CC. The motor ground terminal 60d is located at a position facing the coil terminal 60a through the rotational shaft 42. Among the coil terminals 60a to 60c and the motor ground terminal 60d, the motor ground terminal 60d is the farthest from the connector CC. The coil terminals 60a to 60c and the motor ground terminal 60d are made of metal with electric conductivity. Specifically, the coil terminals 60a to 60c are made of phosphor bronze. In addition, at least one of the coil terminals 60a to 60c may be made of copper other than phosphor bronze. The motor ground terminal 60d is made of stainless steel (SUS304). The intermediate terminals 70a to 70c and the intermediate ground terminal 70d electrically connect the connector terminals 90a to 90c and the connector ground terminal 90d, and the coil terminals 60a to 60c and the motor ground terminal 60d, respectively.

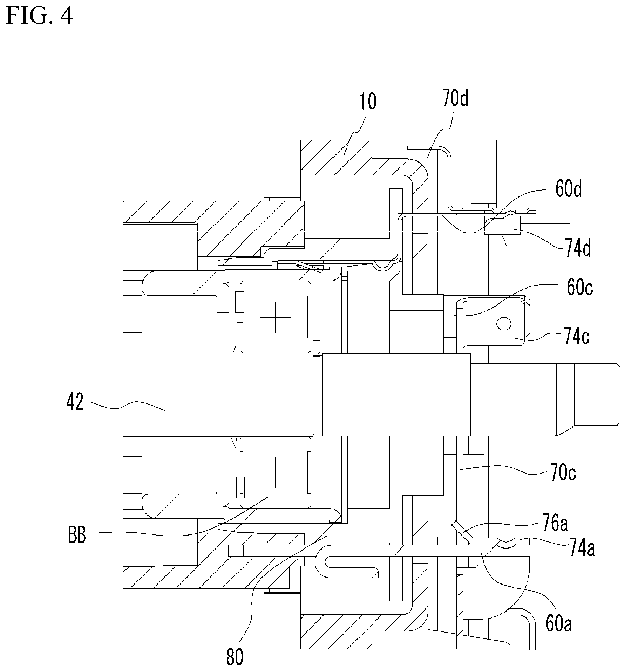

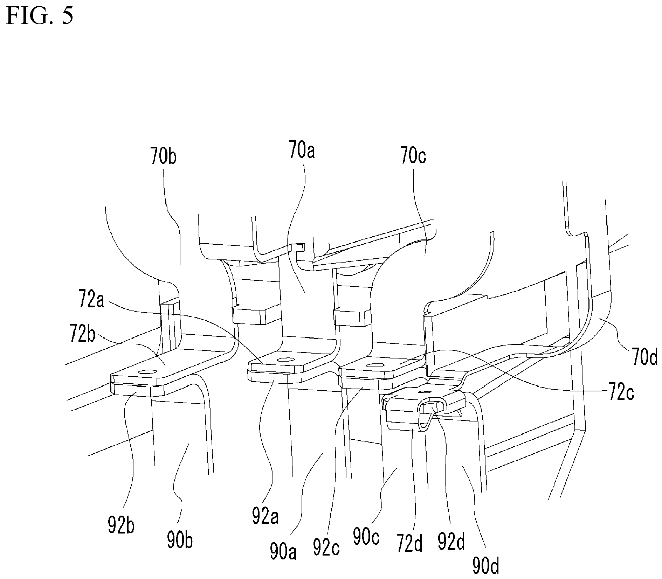

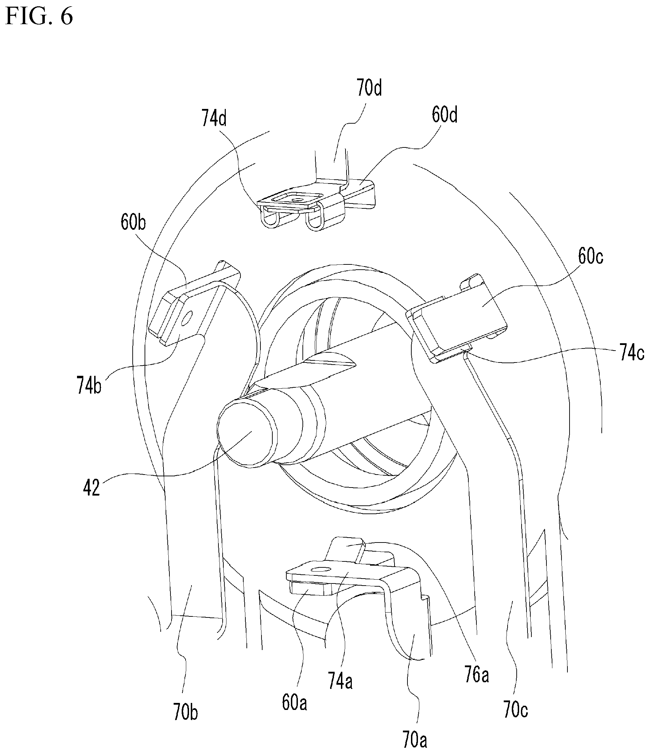

FIG. 4 is a partially enlarged view of FIG. 1 FIG. 5 is a partially enlarged view, of FIG. 3, illustrating the vicinity of the connector terminals 90a to 90c and the connector ground terminal 90d. FIG. 6 is a partially enlarged view, of FIG. 3, illustrating the vicinity of the coil terminals 60a to 60c and the motor ground terminal 60d. As illustrated in FIG. 5, end portions 92a to 92d of the connector terminals 90a to 90c and the connector ground terminal 90d stand up in the axial direction AD so as to be away from the holding member 10. In other words, the end portions 92a to 92d are curved at an angle of approximately 90 degrees in the axial direction AD so as to be away from the holding member 10. Likewise, end portions 72a to 72d of the intermediate terminals 70a to 70c and the intermediate ground terminal 70d stand up in the axial direction AD so as to be away from the holding member 10. Herein, the end portions 92a to 92c are respectively welded to the end portions 72a to 72c. Further, as illustrated in FIG. 6, end portions 74a to 74c of the intermediate terminals 70a to 70c stand up in the axial direction AD so as to be away from the holding member 10. The end portions 74a to 74c are respectively welded to the coil terminals 60a to 60c. In such a way, the connector terminals 90a to 90c and the connector ground terminal 90d of the connector CC are electrically connected to the coil terminals 60a to 60c and the motor ground terminal 60d of the motor M, respectively.

For example, in a case where a connector is provided with a printed circuit board, it is conceivable to solder a coil terminal, to which a coil of the motor is electrically connected, to the printed circuit board. Even in a case where a connector does not use a printed circuit board, the connector and the coil of the motor may be electrically connected to each other by soldering work. In any case, such soldering work is complicated and time consuming, and the productivity of an electric device may be reduced. Since the present embodiment uses welding as described above, the productivity of the blower A according to the present embodiment is improved as compared with the case of using soldering. Moreover, since the connector CC in which the printed circuit board is not provided is used, the production cost is reduced.

Further, as described above, all the portions to be welded stand up in the axial direction AD so as to be away from the holding member 10. For this reason, at the time of welding work, these portion are welded to each other without interfering with other members. For example, even in a case of using a welding head, the welding work is easy, and the productivity of the blower A is improved.

Furthermore, as illustrated in FIG. 6, the coil terminals 60a to 60c are arranged at substantially even angular intervals around the rotational shaft 42, but the end portions 74a to 74c of the intermediate terminals 70a to 70c are located radially inward from the coil terminals 60a to 60c about the rotational shaft 42. For example, the end portion 74a of the intermediate terminal 70a is welded not to the surface of the coil terminal 60a facing the connector CC, but to the surface of the coil terminal 60a facing the rotational shaft 42. Therefore, for example, in a case of using a welding head, by swinging the welding head about the axis of the rotational shaft 42, it is easy to weld the coil terminals 60a to 60c to the end portions 74a to 74c of the intermediate terminals 70a to 70c. This improves the productivity of the blower A. As illustrated in FIG. 6, for example, the end portion 74a of the intermediate terminal 70a is provided with a convex portion having a round shape. The convex portion protrudes toward the coil terminal 60a. Therefore, before the end portion 74a and the coil terminal 60a are welded to each other, the convex portion of the end portion 74a and the plane of the coil terminal 60a are in point contact with each other. This improves processability in welding by fusing processing. The same applies to the end portions 74b and 74c and the coil terminals 60b and 60c.

As described above, the coil terminals 60a to 60c are respectively welded to the end portions 74a to 74c of the intermediate terminals 70a to 70c by swinging the welding head about the axis of the rotational shaft 42. Therefore, in the welding work, the order of arrangement of the coil terminals 60a and the end portion 74a with respect to the welding head, the order of arrangement of the coil terminals 60b and the end portion 74b with respect to the welding head, and the order of arrangement of the coil terminals 60c and the end portion 74c with respect to the welding head are the same. This suppresses variations in bonding strength between the coil terminals 60a to 60c and the intermediate terminals 70a to 70c that differ in material.

As illustrated in FIG. 6, the end portion 74a of the intermediate terminal 70a is formed with a protruding piece 76a. The protruding piece 76a is a part of the end portion 74a bent so as to obliquely protrude toward the rotational shaft 42. Herein, among the coil terminals 60a to 60c, the coil terminal 60a is the closest to the connector CC. Thus, for example, when the intermediate terminal 70a to be electrically connected to the coil terminal 60a is assembled to the holding member 10, a worker may try to erroneously cause the end portion 74a to contact the surface of the coil terminal 60a opposite to the rotational shaft 42. In the present embodiment, the protruding piece 76a is provided in the end portion 74a. Thus, even when the worker tries to cause the end portion 74a to contact the surface of the coil terminal 60a opposite to the rotational shaft 42, the protruding piece 76a interferes with the coil terminal 60a, which prevents such assembly. In this way, the intermediate terminal 70a is prevented from being erroneously assembled, thereby ensuring the productivity of the blower A.

As illustrated in FIG. 5, for example, a convex portion having a round shape is provided in the end portion 72a of the intermediate terminal 70a. The convex portion protrudes toward the end portion 92a. Therefore, before the end portions 72a and 92a are welded to each other, the convex portion of the end portion 72a and the plane of the end portion 92a are in point contact with each other. This improves the processability in welding. The same applies to the end portions 72b and 92b, the end portions 72c and 92c, and the end portions 74a to 74c and the coil terminals 60a to 60c.

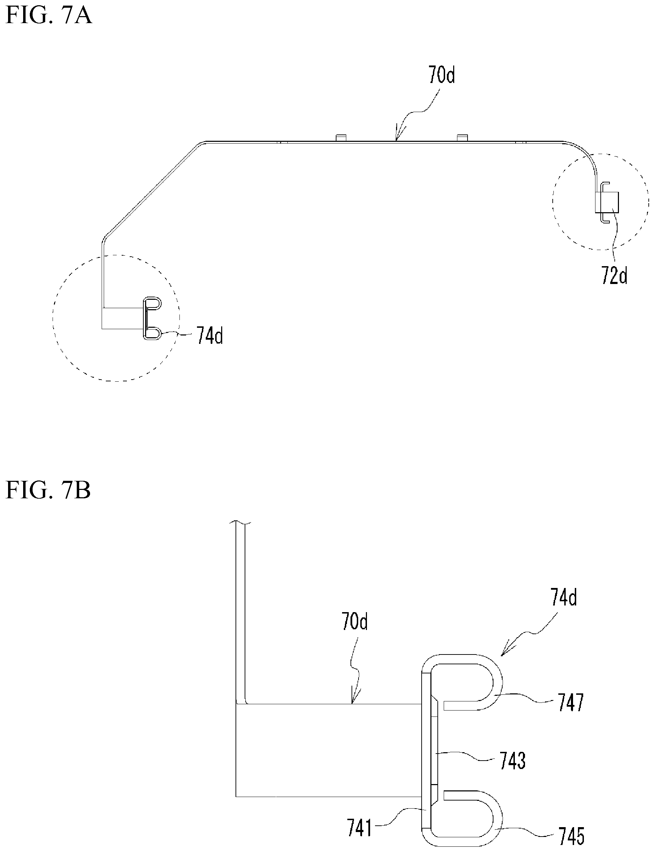

Next, the intermediate ground terminal 70d will be described. FIG. 7A is an external view of the intermediate ground terminal 70d. FIG. 7B is an enlarged view, of FIG. 7A, illustrating the end portion 74d. The end portion 74d includes a base portion 741, a protruding portion 743, and arm portions 745 and 747. The base portion 741 stands up. The protruding portion 743 slightly protrudes from the base portion 741. The arm portions 745 and 747 extend from both sides of the base portion 741, respectively. The arm portions 745 and 747 are elastically bendable. End portions of the arm portions 745 and 747 face the protruding portion 743. As illustrated in FIGs. 7B and 6, the motor ground terminal 60d is sandwiched between the end portions of the arm portions 745 and 747 and the protruding portion 743. Since the arm portions 745 and 747 respectively press both sides of the motor ground terminal 60d, the end portion 72d is suppressed from dropping off from the motor ground terminal 60d.

Herein, in a state where the motor ground terminal 60d is not sandwiched, a gap between each end portion of the arm portions 745 and 747 and the protruding portion 743 is slightly smaller than the thickness of the motor ground terminal 60d. By inserting the motor ground terminal 60d between each end portion of the arm portions 745 and 747 and the protruding portion 743, the arm portions 745 and 747 are elastically deformed such that the end portions of the arm portions 745 and 747 urge the motor ground terminal 60d to the protruding portion 743 with elastic restoring force of the arm portions 745 and 747. In such a manner, the end portion 74d of the intermediate ground terminal 70d and the motor ground terminal 60d are not welded to each other, but are in close contact with each other with the elastic force of the end portion 74d. This reduces the number of welded points and improves the productivity of the blower A.

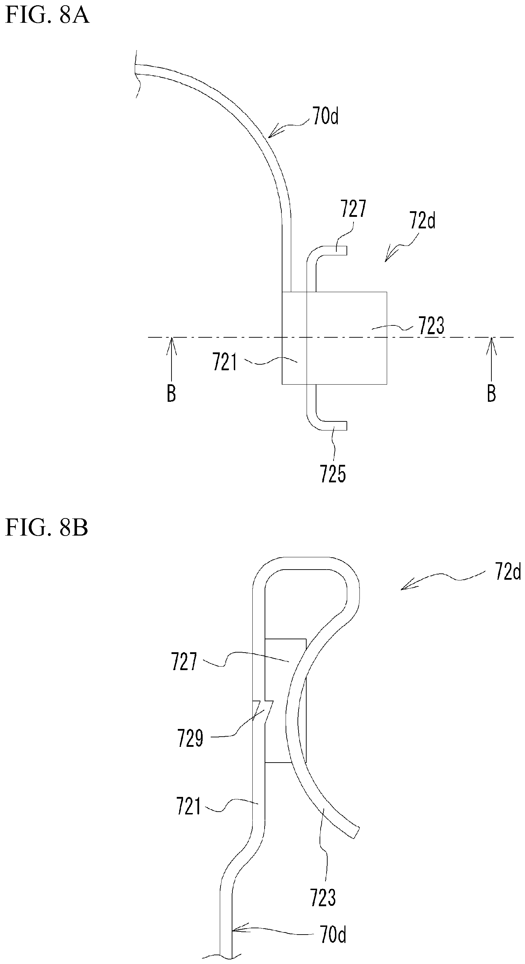

FIG. 8A is an enlarged view, of FIG. 7A, illustrating the end portion 72d. FIG. 8B is a cross-sectional view taken along B-B line of FIG. 8A. The end portion 72d includes a base portion 721, a pressing portion 723, and arm portions 725 and 727. The base portion 721 stand up in the axial direction AD. The pressing portion 723 continues from the base portion 721 and is curved halfway so as to face the base portion 721. As illustrated in FIG. 8B, the pressing portion 723 is curved so as to be convex toward the base portion 721. The arm portions 725 and 727 protrude from both sides of the base portion 721 and are curved to one side of the base portion 721. Each of the arm portions 725 and 727 is shorter than each of the arm portions 745 and 747 of the end portion 74d described above. As illustrated in FIGs. 8A and 5, the arm portions 725 and 727 press both sides of the end portion 92d of the connector ground terminal 90d, which suppresses the end portion 72d of the intermediate ground terminal 70d from being dropped off from the end portion 92d of the connector ground terminal 90d.

Further, the end portion 92d of the connector ground terminal 90d is inserted between the base portion 721 and the pressing portion 723. Herein, in a state where the end portion 92d of the connector ground terminal 90d is not inserted between the base portion 721 and the pressing portion 723, the smallest gap between the base portion 721 and the pressing portion 723 is slightly smaller than the thickness of the end portion 92d of the connector ground terminal 90d. The end portion 92d of the connector ground terminal 90d is inserted between the base portion 721 and the pressing portion 723, so that the pressing portion 723 is elastically deformed to urge the end portion 92d of the connector ground terminal 90d toward the base portion 721 with elastic restoring force of the pressing portion 723. In such a way, the end portion 72d of the intermediate ground terminal 70d and the connector ground terminal 90d are not welded to each other, but are in close contact with each other with the elastic force of the end portion 72d. This reduces the number of welded points and improves the productivity of the blower A.

As illustrated in FIG. 8B, the base portion 721 is provided with a convex portion 729 protruding toward the pressing portion 723, and the convex portion 729 is in close contact with the end portion 92d of the connector ground terminal 90d. This ensures the electric conductivity between the intermediate ground terminal 70d and the connector ground terminal 90d.

While the exemplary embodiments of the present invention have been illustrated in detail, the present invention is not limited to the above-mentioned embodiments, and other embodiments, variations and variations may be made without departing from the scope of the present invention.

## Claims

1. An electric device comprising:
a motor (M);
a connector (CC);
an intermediate terminal (70a, 70b, 70c) electrically connecting the motor (M) and the connector (CC); and
a holding plate (10) holding the motor (M), the connector (CC), and the intermediate terminal (70a, 70b, 70c),
wherein
the motor (M) is held on one side of the holding plate (10),
the connector (CC) and the intermediate terminal (70a, 70b, 70c) are held on another side of the holding plate (10),
the motor (M) includes a coil terminal (60a, 60b, 60c),
the coil terminal (60a, 60b, 60c) is electrically connected to a coil (30) of the motor (M) and penetrates the holding plate (10) from the one side to the another side,
the connector (CC) includes a connector terminal (90a, 90b, 90c), and
the intermediate terminal (70a, 70b, 70c) is welded and electrically connected to the coil terminal (60a, 60b, 60c) and the connector terminal (90a, 90b, 90c).

2. The electric device according to claim 1, wherein a first end of the coil terminal (60a, 60b, 60c) and a first end (74a, 74b, 74c) of the intermediate terminal (70a, 70b, 70c) are welded to each other and stand up away from the holding plate (10).

3. The electric device according to claim 1 or 2, wherein a first end (92a, 92b, 92c) of the connector terminal (90a, 90b, 90c) and a second end (72a, 72b, 72c) of the intermediate terminal (70a, 70b, 70c) are welded to each other and stand up away from the holding plate (10).

4. The electric device according to claim 2 or 3,
wherein
pairs of the intermediate terminals (70a, 70b, 70c), the coil terminals (60a, 60b, 60c), and the connector terminals (90a, 90b, 90c) are provided,
the first end of the coil terminal (60a, 60b, 60c) and the first end (74a, 74b, 74c) of the intermediate terminal (70a, 70b, 70c) are welded to each other, and
the first end (74a, 74b, 74c) of the intermediate terminal (70a, 70b, 70c) is located radially inward from the first end of the coil terminal (60a, 60b, 60c) about an axis of a rotor of the motor (M).

5. The electric device according to claim 4, wherein the first end (74a, 74b, 74c) of the intermediate terminal (70a, 70b, 70c) welded to the first end of the coil terminal (60a, 60b, 60c) that is closest to the connector terminal (90a, 90b, 90c) among the coil terminals (60a, 60b, 60c) is provided with a protruding piece (76a) that is bent so as to protrude toward the axis.

6. The electric device according to any one of claims 1 to 5, further comprising an intermediate ground terminal (70d),
wherein
the connector (CC) includes a connector ground terminal (90d), and
the intermediate ground terminal (70d) is in elastic contact with the connector ground terminal (90d), and is not welded to the connector ground terminal (90d).

7. The electric device according to any one of claims 1 to 6,
wherein
the coil terminal (60a, 60b, 60c) and the connector terminal (90a, 90b, 90c) are made of phosphor bronze, and
the intermediate terminal (70a, 70b, 70c) is made of copper.

8. The electric device according to claim 6, wherein the intermediate ground terminal (70d) is made of stainless steel.

9. The electric device according to any one of claims 1 to 8, wherein the connector (CC) is not provided with a printed circuit board.
